# DEMANDE DE BREVET EUROPEEN

(11) **EP 1 921 308 A1**
(43) Date de publication de la demande: **14.05.2008**
(21) Numéro de dépôt: 07119169.6
(22) Date de dépôt: 24.10.2007
(51) Int. Cl.: F02P 5/15

(54) **Procédé de pilotage de l'avance a l'allumage pour véhicule automobile**

(30) Priorité: 31.10.2006 FR 0654674
(71) Demandeur: Peugeot Citroën Automobiles Société Anonyme, 78140 Velizy Villacoublay (FR)
(72) Inventeur: Fontaine, David, 94200, Ivry sur Seine (FR)
(74) Mandataire: Ménès, Catherine

(57) **Abrégé**

L'invention concerne un procédé de commande d'allumage dans un moteur à allumage commandé, lors d'un démarrage moteur pendant lequel il est prévu une phase transitoire d'accélération suivie d'une phase de décélération vers une valeur de ralenti du régime moteur. L'admission est effectuée selon un profil de double levée et que pendant toute la phase transitoire d'accélération, l'allumage est commandé avec une dégradation de rendement de l'avance à l'allumage D1 inférieure à 0,2, que pendant la partie finale de la phase de ralenti, l'allumage est commandé avec une dégradation de rendement de l'avance à l'allumage maximale Dm supérieure à 0,4, et entre la phase transitoire et la phase finale, avec une dégradation de rendement de l'avance à l'allumage intermédiaire Di, comprise entre 0,2 et 0,4.

## Description

La présente invention concerne un procédé de contrôle de l'avance à l'allumage pour les moteurs à allumage commandé, tout particulièrement pour des moteurs pour véhicule automobile.

Dans un moteur dit à allumage commandé, la combustion est provoquée par exemple par une étincelle générée par une bougie. En théorie, cette combustion se produit exactement au moment où le piston est au point mort haut. Toutefois, l'étincelle d'une bougie ne permet pas une inflammation instantanée dans toute la chambre de combustion de sorte que la combustion se prolonge tant que la flamme ne s'est pas entièrement propagée à l'intérieur de la chambre. Pour tenir compte de ce décalage temporel, l'allumage est donc commandé un peu avant que le piston n'atteigne le point mort haut.

Plus le mélange utilisé pour alimenter le moteur est pauvre (autrement dit, le carburant est fourni dans un rapport sous stoechiométrique par rapport à la réaction de combustion), plus la vitesse de propagation de la flamme est lente, donc l'avance à l'allumage doit être adaptée pour retrouver une avance optimale. L'allumage de la bougie par rapport au point mort haut du piston est anticipé ou autrement dit, il y a augmentation de l'angle de rotation de l'arbre moteur, exprimé par exemple en degrés, entre l'instant où la flamme jaillit et le point mort haut (qui par convention se produit pour un angle de 360°).

Par ailleurs, la vitesse de combustion étant essentiellement dépendante de la vitesse de rotation du moteur, pour conserver une pression maximale alors que le temps alloué au piston pour passer du point mort haut au point mort bas diminue avec une augmentation de la vitesse de rotation du moteur, il est nécessaire d'augmenter le temps de combustion, autrement dit d'augmenter l'avance à l'allumage lorsque le régime moteur augmente.

En principe, un mélange pauvre va brûler de façon plus complète ce qui tend à diminuer notamment les émissions d'hydrocarbures imbrûlés mais à la condition que le régime moteur ne devienne pas instable par « manque » de carburant. Le brevet FR 2 872 860 a montré qu'un pilotage des soupapes d'admission de type double levée pouvait dans une large mesure pallier ce risque d'instabilité.

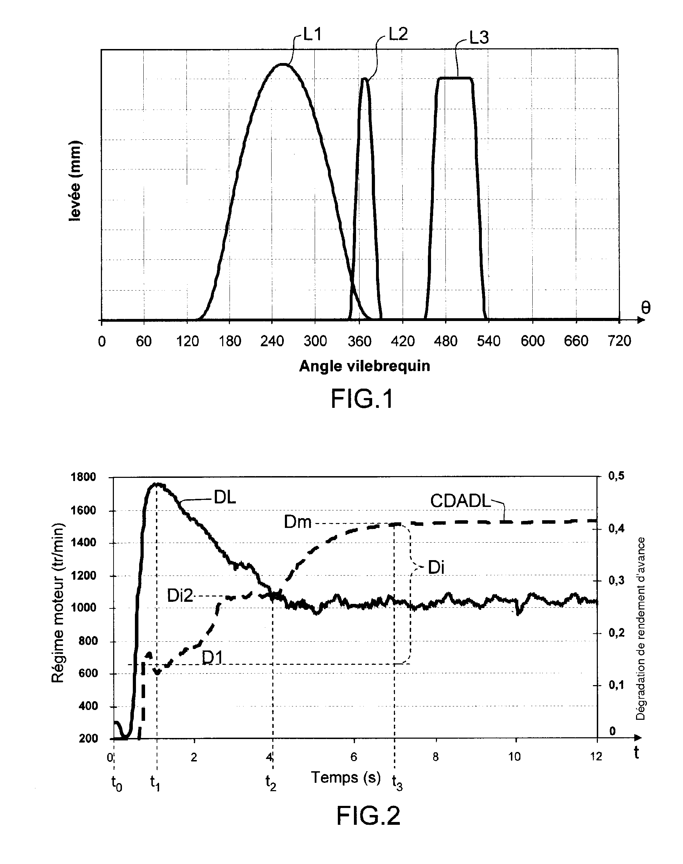

La figure 1 montre un diagramme représentatif de la double levée (DL) des soupapes d'admission d'un moteur à combustion, en fonction de la position angulaire θ du vilebrequin. L'axe des ordonnées du diagramme levée (mm.) représente la hauteur de levée en mm des soupapes.

La double levée se décompose en une levée Pilote (courbe L2), avec une ouverture de la soupape d'admission qui se produit de manière à croiser avec l'ouverture de la soupape d'échappement (courbe L1), et une fermeture qui se produit très peu de temps après le point mort haut (PMH) du piston et une levée Principale (courbe L3), avec l'ouverture de la soupape d'admission la dégradation de rendement d'avance qui se produit au moment où la dynamique des gaz est la plus importante dans les conduits d'admission : à la mi-course du piston et la fermeture de la soupape d'admission qui se produit avant le point mort bas (PMB) du piston.

Une telle double levée permet d'optimiser les turbulences gazeuses dans la chambre d'admission, la levée principale débutant alors que le piston est proche de sa mi-course, donc au moment où sa vitesse de déplacement est la plus grande ce qui tend à diminuer les instabilités du moteur - et permet donc de compenser une augmentation de celles-ci générées par une avance à l'allumage plus grande et donc in fine, l'utilisation de mélange plus pauvre. Par ailleurs, la levée pilote alors que la soupape d'échappement est encore ouverte conduit à une réaspiration d'une partie des gaz d'échappement de sorte que la chambre de combustion est plus chaude. Il en résulte des gaz d'échappement eux-mêmes plus chauds ce qui favorise le bon fonctionnement des équipements de post-traitement, notamment catalyseurs et éventuellement pré-catalyseurs placés dans la ligne d'échappement.

Une telle double levée permet d'optimiser les turbulences gazeuses dans la chambre d'admission, la levée principale débutant alors que le piston est proche de sa mi-course, donc au moment où sa vitesse de déplacement est la plus grande ce qui tend à diminuer les instabilités du moteur - et permet donc de compenser une augmentation de celles-ci générées par une avance à l'allumage plus grande et donc in fine, l'utilisation de mélange plus pauvre. Par ailleurs, la levée pilote alors que la soupape d'échappement est encore ouverte conduit à une réaspiration d'une partie des gaz d'échappement de sorte que la chambre de combustion est plus chaude. Il en résulte des gaz d'échappement eux-mêmes plus chauds ce qui favorise le bon fonctionnement des équipements de post-traitement, notamment catalyseurs et éventuellement pré-catalyseurs placés dans la ligne d'échappement.

Même si le système décrit dans le brevet français précité permet de dégrader sensiblement l'avance à l'allumage, l'application d'une dégradation maximale de l'avance à l'allumage dès le démarrage du moteur peut s'avérer être source d'émissions importantes d'hydrocarbures. En effet, tous les avantages d'un mélange pauvre et d'une combustion longue ne sont effectifs que si la combustion se produit bien, donc si les ratés de combustion ne sont pas trop nombreux, un raté de combustion générant des émissions importantes d'hydrocarbures imbrûlés. Or, au moment du démarrage du moteur, le mélange air-carburant est particulièrement difficile à contrôler, surtout si le mélange est trop pauvre (richesse inférieure à 0,85) et/ou l'avance à l'allumage trop importante. De ce fait, les stratégies de contrôle moteur utilisées prévoient une avance à l'allumage faible pendant toute la phase de démarrage qui rappelons le, est typiquement de l'ordre de 10s.

Il serait donc souhaitable de proposer une nouvelle stratégie de contrôle moteur au moment du démarrage, permettant de dégrader l'avance à l'allumage beaucoup plus tôt lors d'un démarrage, autorisant ainsi un mélange plus pauvre - et ceci sans augmenter les risques de ratés de combustion.

Lors d'un démarrage moteur, il est en général prévu une phase transitoire d'accélération suivie d'une phase de décélération vers une valeur de ralenti du régime moteur. Selon l'invention, il est proposé d'utiliser pendant toute la phase transitoire d'accélération du régime moteur une avance à l'allumage d'une dégradation de rendement inférieure à 0,2, pendant la partie finale de la phase de ralenti, une avance à l'allumage d'une dégradation de rendement de l'avance à l'allumage maximale Dm supérieure à 0,4 et pendant la période intermédiaire, donc notamment, entre la phase transitoire et la partie finale de la phase de ralenti, une avance à l'allumage intermédiaire Di, de préférence variable, comprise entre 0,2 et 0,4.

Avantageusement entre la phase transitoire et la partie finale de la phase de ralenti, la dégradation de rendement de l'avance à l'allumage Di varie de façon croissante.

La dégradation de rendement d'avance Raa est définie comme la diminution du couple moteur due à l'avance à l'allumage, ce couple étant supposé maximum pour une avance nulle, autrement dit Raa=0 pour un allumage parfaitement synchronisé avec le point mort haut. En général, lors d'un démarrage à froid, pour un moteur équipé d'un arbre à cames conventionnel, l'avance à l'allumage est réglée de manière telle que Raa est environ compris entre 0,10 et 0,20 - typiquement de l'ordre de 0,15.

Selon une variante préférée de l'invention, l'application d'une dégradation de rendement de l'avance à l'allumage croissante Dm est subordonnée à une condition de stabilité du régime moteur.

Dans une autre réalisation, l'application d'une dégradation de rendement de l'avance à l'allumage intermédiaire Di croissante est subordonnée à une condition de stabilité du régime moteur.

Selon un mode de réalisation, la condition de stabilité du régime moteur est une variation maximale du régime comprise entre +/- 30 tr/min.

Pour minimiser encore plus les risques de ratés de combustion, dans une variante préférée de l'invention, une stratégie de contrôle de soupape spécifique est commandée jusqu'à un régime moteur de 800 tr/min, la stratégie de soupape consistant en une ouverture tardive de la soupape d'admission à mi-course du piston dans le cylindre permettant la génération d'une forte aérodynamique au niveau de la soupape et une meilleure pulvérisation de l'essence.

Dans une réalisation, la commande des soupapes d'admission est effectuée selon un profil de double levée pendant toute la phase de démarrage du moteur.

L'invention sera mieux comprise par la description d'un exemple de procédé de contrôle de l'avance à l'allumage pour véhicule selon l'invention à l'aide de dessins annexés dans lesquels :
- la figure 1, déjà décrite, montre un diagramme représentatif de la double levée des soupapes (DL) d'échappement et d'admission d'un moteur à combustion ;
- la figure 2 montre une première courbe de régime DL montrant lors d'un démarrage moteur le pilotage de la dégradation de rendement d'avance, par le procédé selon l'invention, en fonction du temps t,
- la figue 3 compare le fonctionnement en double levée DL couplé à la stratégie de pilotage de l'avance à l'allumage selon l'invention et un fonctionnement ou l'on pilote les soupapes d'admission avec un profil d'ouverture de type moteur Arbre à Came (AAC) classique ;
- la figure 4 compare les pressions dans le collecteur dans le cas de l'invention et dans le cas d'un moteur contrôlé selon l'art antérieur ;
- la figure 5 compare, aux temps de la figure 4, l'évolution de l'avance à l'allumage dans le cas de l'invention ou du moteur contrôlé selon l'art et de l'avance à l'allumage et dans le cas d'un moteur contrôlé selon l'art antérieur.

La stratégie de commande de l'allumage selon l'invention dans l'exemple de réalisation qui suit, s'applique à un moteur à combustion à allumage commandé muni de moyens pour piloter deux levées successives (DL) pour une même soupape d'admission lors d'une phase d'admission, à l'exemple de soupapes électromagnétiques ou électromécaniques. Le moteur est aussi muni d'un dispositif permettant de faire varier les diagrammes des soupapes d'admission. L'invention peut bien sûr être mise en place avec un moteur équipé de plus d'une soupape d'admission par cylindre, la levée pilote étant obtenue par l'ouverture d'une première soupape et la levée principale par l'ouverture d'une seconde soupape.

Même si ces techniques n'ont pas nécessairement les mêmes avantages, et notamment la souplesse, des techniques permettant une double levée des soupapes, l'invention peut également être utilisée avec des moteurs disposant d'autres moyens pour générer une forte aérodynamique dans les chambres de combustion, et par conséquent, autoriser de très fortes dégradations de rendement de l'avance à l'allumage maximale. Tel est le cas par exemple avec des moteurs dont les conduits d'admission sont munis de clapets afin de générer des effets dits « tumble ».

Le procédé de commande de l'allumage sera notamment décrit pendant le temps de démarrage d'un moteur à froid, soit, par exemple, pendant un temps inférieur à 10 secondes au bout duquel le régime moteur doit avoir atteint un régime de ralenti fixé par une consigne de ralenti.

Comme indiqué précédemment, le démarrage du moteur comporte habituellement une phase transitoire d'accélération du régime moteur (ou pic d'accélération) suivie d'une phase de ralentissement du régime moteur vers un régime moteur ralenti fixé par une consigne de ralenti.

Sur la figure 2, les variations du régime moteur en fonction du temps t (axe gauche des ordonnées, en tr/mn) sont indiquées par la courbe de régime DL, la courbe CDADL montrant pour sa part le réglage de la dégradation de rendement d'avance au même temps t.

Pour ce qui concerne la consigne de régime moteur, elle passe essentiellement par 3 périodes :
- entre un temps t0 et un temps t1 : phase d'accélération du moteur dont le régime monte vers 1800 tr/mn. Dans cet exemple en environ 1 seconde (avec au temps initial, une très légère temporisation, correspondant notamment à l'alimentation du démarreur du véhicule).
- entre le temps t1 et un temps t2 (t2 étant dans cet exemple égal à environ 4 secondes), décroissance progressive du régime moteur jusqu'au régime du ralenti, vers 1000 t/mn.
- après le temps t2 régime du ralenti.
   Le réglage de la consigne d'avance à l'allumage obéit pour sa part à une loi un peu plus complexe.
- entre le temps t0 et le temps t1 : commande d'une dégradation D1 de l'avance à l'allumage de type moteur à arbre à cames classique, avec une dégradation de rendement d'avance à l'allumage d'environ 0,15.
- au delà du temps t3, postérieur au temps t2, et dans le cas ici illustré de l'ordre de 7s, donc dans une période définie comme la phase finale de la phase de ralenti, la dégradation de l'avance à l'allumage est maximale, d'une valeur Dm, dans le cas illustré un peu supérieure à 0,4.
- pendant la période intermédiaire entre t1 et le début t3 de la phase finale de la phase de ralenti, commande d'une dégradation intermédiaire Di de l'avance à l'allumage.

Cette période intermédiaire peut elle-même être analysée en plusieurs sous périodes. Immédiatement après le temps t1, la valeur intermédiaire Di croît rapidement pour atteindre un seuil Di2, correspondant à une dégradation de rendement d'avance d'environ 0,26. A l'approche de t2, la dégradation de rendement de l'avance à l'allumage est maintenue pendant quelque temps à cette valeur de seuil Di2. Puis, au-delà du temps t2, lorsque le régime moteur est stabilisé, la valeur continue à progresser pour atteindre à t3 la valeur Dm.

La loi de commande de la consigne d'avance à l'allumage peut être prédéfinie, par exemple en fixant le temps t3. Dans une variante plus spécialement préférée, la variation est liée à une condition sur la stabilité du régime moteur, la dégradation progressive de l'avance à l'allumage étant temporairement stoppée si la condition de stabilité du régime moteur n'est pas satisfaite. Un exemple de condition de stabilité du régime moteur est que les variations de régime moteur soient comprises entre +/- 30 tr/min. Ceci permet de mieux tenir compte de paramètres extérieurs, à commencer par la température ambiante.

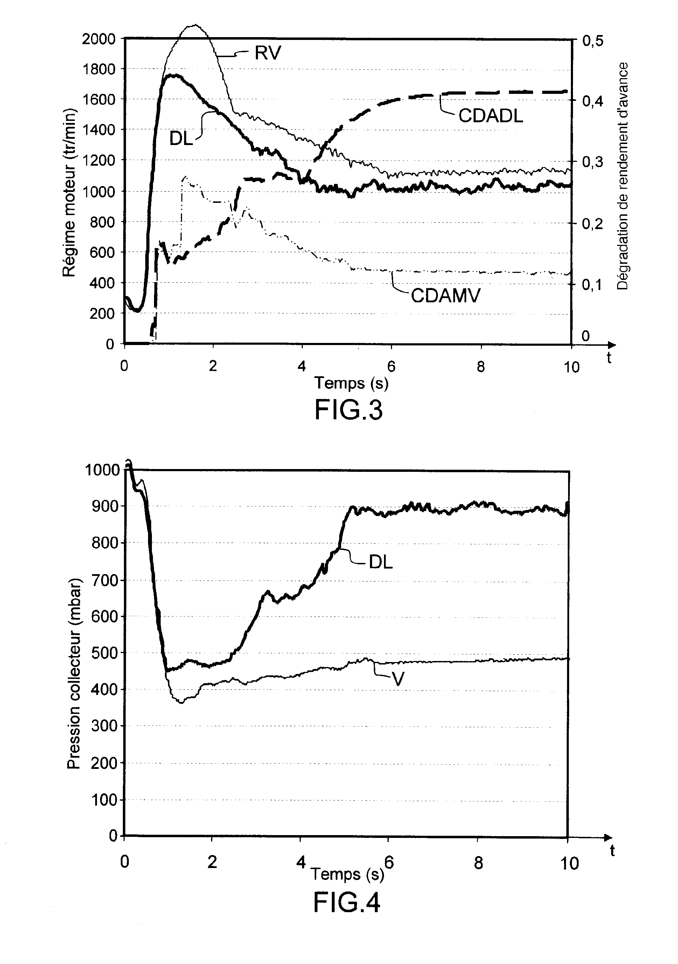

La figure 3 compare, sur une séquence composée d'un démarrage suivi d'un ralenti tel que représenté à la figure 2, le fonctionnement en double levée DL couplé à la stratégie de pilotage de l'avance à l'allumage selon l'invention et un fonctionnement où l'on pilote les soupapes d'admission avec un profil d'ouverture de type moteur Arbre à Came (AAC) classique que l'on appelle ici « mode vanné».

Sur cette figure 3, on a ainsi représenté, la courbe DL du régime moteur dans un fonctionnement en double levée la courbe du régime moteur en mode vanné RV (ces deux courbes faisant référence à l'axe de gauche des ordonnées) ainsi que les variations appliquées pour l'avance à l'allumage, illustrées par la dégradation rendement d'avance à l'allumage, avec respectivement la courbe CDADL pour le mode double levée et la courbe CDAMV pour le mode vanné.

Pour ces deux modes, on a comparé les pressions dans le collecteur d'admission, représentées figure 4, avec une commande d'allumage selon l'invention (DL), et une commande d'allumage conventionnelle, associée à une levée des soupapes conventionnelles (V).

Lors de la phase de démarrage une stratégie soupape spécifique est commandée jusqu'à 800 tr/min. Cette stratégie au démarrage du moteur est la même pour les deux essais présentés ci-dessus (double levée DL et mode vanné). Elle consiste en une ouverture tardive de la soupape à mi-course piston permettant la génération d'une forte aérodynamique au niveau de la soupape et une meilleure pulvérisation de l'essence.

Ce diagramme d'ouverture des soupapes a aussi pour effet d'augmenter le remplissage par rapport à un diagramme de type Arbre à Came, ce qui explique le pic de régime moteur au démarrage. Ce pic est fortement réduit pour le fonctionnement en double levée DL car la calibration de l'avance à l'allumage et de l'ouverture papillon a été modifiée.

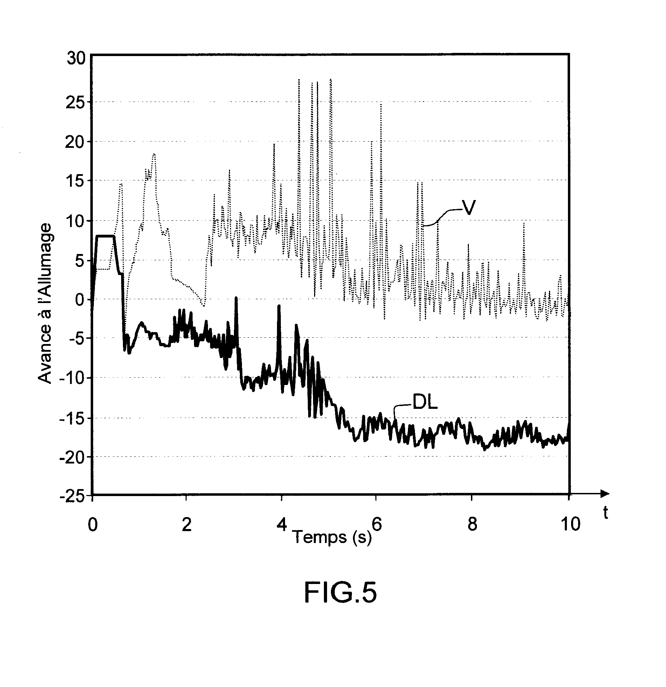

La figure 5 illustre en parallèle les variations aux mêmes temps de l'avance à l'allumage (la courbe inférieure, en trait épais, correspondant au mode dit double levée DL, la courbe supérieure, en trait mince, correspondant au mode vanné V).

Clairement, dans le cas de l'invention, (les variations instantanées) le creux de la pression dans le collecteur qui suit le démarrage du moteur est fortement réduit, ce qui se traduit par un démarrage beaucoup plus robuste, avec une meilleure maîtrise de la richesse, sans calage ni même creux de régime.

Par ailleurs, le procédé selon l'invention permet d'appliquer plus rapidement une dégradation maximale de l'avance à l'allumage, de sorte que les émissions d'hydrocarbures imbrûlés sont significativement réduites et la température des gaz d'échappement est augmentée.

Finalement, par rapport à une stratégie classique la commande de l'avance à l'allumage selon l'invention permet dès la sortie de la phase de démarrage (N>800tr/min) de piloter une avance toujours inférieure à l'avance pilotée sur un moteur classique tout en ayant un profil de régime stable.

Ainsi nous obtenons un démarrage robuste, les émissions d'hydrocarbures sont réduites et la température des gaz d'échappement accrue.

## Revendications

1. Procédé de commande d'allumage dans un moteur à allumage commandé, lors d'un démarrage moteur pendant lequel il est prévu une phase transitoire d'accélération suivie d'une phase de décélération vers une valeur de ralenti du régime moteur, **caractérisé en ce que** pendant toute la phase transitoire d'accélération, l'allumage est commandé avec une dégradation de rendement de l'avance à l'allumage D1 inférieure à 0,2, que pendant la partie finale de la phase de ralenti, l'allumage est commandé avec une dégradation de rendement de l'avance à l'allumage maximale Dm supérieure à 0,4, et entre la phase transitoire et la partie finale de la phase de ralenti, avec une dégradation de rendement de l'avance à l'allumage intermédiaire Di , comprise entre 0,2 et 0,4.

2. Procédé de commande d'allumage selon la revendication 1, **caractérisé en ce que**, entre la phase transitoire et la partie finale de la phase de ralenti, la dégration de rendement de l'avance à l'allumage Di varie de façon croissante.

3. Procédé de commande d'allumage selon l'une quelconque des revendications précédentes, **caractérisé en ce que** l'application d'une dégradation de rendement de l'avance à l'allumage croissante Dm est subordonnée à une condition de stabilité du régime moteur.

4. Procédé de commande d'allumage selon l'une quelconque des revendications précédentes, **caractérisé en ce que** l'application d'une dégradation de rendement de l'avance à l'allumage intermédiaire Di croissante est subordonnée à une condition de stabilité du régime moteur.

5. Procédé de commande d'allumage selon la revendication 3 ou la revendication 4, **caractérisé en ce que** la condition de stabilité du régime moteur est une variation maximale du régime comprise entre +/- 30 tr/min.

6. Procédé de commande d'allumage selon l'une des revendications 1 à 5, **caractérisé en ce que** lors du démarrage du moteur, une stratégie de contrôle de soupape spécifique est commandée jusqu'à un régime moteur de 800 tr/min, la stratégie de soupape consistant en une ouverture tardive de la soupape d'admission à mi-course du piston dans le cylindre.

7. Procédé de commande d'allumage selon l'une quelconque des revendications 1 à 6, **caractérisé par** une commande des soupapes d'admission selon un profil de double levée pendant toute la phase de démarrage du moteur.
